# EUROPÄISCHE PATENTSCHRIFT

(11) **EP 2 443 698 B1**
(45) Veröffentlichungstag und Bekanntmachung des Hinweises auf die Patenterteilung: **29.06.2016**
(21) Anmeldenummer: 10722052.7
(22) Anmeldetag: 19.05.2010
(51) Int. Cl.: H01Q 3/24, H01Q 3/26, G01S 13/02, G01S 13/42

(54) **OPTIMIERUNG DER SCHALTREIHENFOLGE BEI GESCHALTETEN ANTENNENARRAYS**
OPTIMIZING OF SWITCHING SEQUENCE OF SWITCHED ANTENNA ARRAYS
OPTIMISATION D'UNE SÉQUENCE D'ACTIVATION POUR RÉSEAUX D'ANTENNES COMMUTÉS

(30) Priorität: 17.06.2009 DE 102009027003
(43) Veröffentlichungstag der Anmeldung: 25.04.2012
(73) Patentinhaber: Endress+Hauser GmbH+Co. KG, 79689 Maulburg (DE)
(72) Erfinder: FEIL, Peter, 89081 Ulm (DE)
(74) Vertreter: Andres, Angelika Maria
(86) Internationale Anmeldenummer: PCT/EP2010/056857
(87) Internationale Veröffentlichungsnummer: WO 2010/145904

(56) Entgegenhaltungen:
- US-A1- 2003 052 813
- US-A1- 2008 291 088
- US-B1- 6 292 129
- KATKOVNIK V ET AL: "System Modeling and Signal Processing for a Switch Antenna Array Radar" IEEE TRANSACTIONS ON SIGNAL PROCESSING, IEEE SERVICE CENTER, NEW YORK, NY, US LNKD- DOI:10.1109/TSP.2004.827204, Bd. 52, Nr. 6, 1. Juni 2004 (2004-06-01), Seiten 1513-1523, XP011113037 ISSN: 1053-587X in der Anmeldung erwähnt

## Beschreibung

Die Erfindung betrifft einen Radarsensor gemäß dem Oberbegriff des Anspruchs 1 sowie ein Verfahren zum Betrieb eines Radarsensors gemäß dem Oberbegriff des Anspruchs 15. Zur Bestimmung der Winkellage eines Zielobjekts werden Radarsensoren eingesetzt, die entweder im Sendepfad oder im Empfangspfad ein Antennenarray mit einer Anzahl von linear nebeneinander angeordneten Antennenelementen umfassen. Dabei hängt die Phasenprogression der den einzelnen Antennenelementen zugeordneten Empfangssignale von der Winkellage des Zielobjekts ab.

Bei statischen Zielen kann mit derartigen Antennenarrays eine Winkellage eines Zielobjekts ermittelt werden. Bei bewegten Zielen kommt es jedoch zu einer Überlagerung der von der Winkellage des Ziels verursachten Phasenprogression und der von der Geschwindigkeit des Ziels verursachten Phasenprogression. Dabei ist es nur mit aufwändigen Analysetechniken wie beispielsweise der digitalen Strahlformung möglich, sowohl die Winkellage als auch die Geschwindigkeit des Zielobjekts zu ermitteln.

Derartige Analysetechniken sind beispielsweise in dem Artikel "System modeling and signal processing for a switch antenna array radar" von Lee et al., IEEE Transactions on Signal Processing, Vol. 52, No. 6, 2004, in dem Artikel "High-resolution frequencywavenumber spectrum analysis" von J. Capon, Proceedings of the IEEE, Vol. 57, No. 8, 1969, und in dem Artikel "Multiple emitter location and signal parameter estimation", IEEE Transactions on Antennas and Propagation, Vol. 34, No. 3, 1986 beschrieben. Ferner wird in US 6.292.129 B1 ein Radarsystem mit einem Sender, einem Empfänger und einem Signalprozessor beschrieben. Der Empfänger besteht wiederum aus acht Empfangsantennen, die in einer Reihe aufgestellt sind und Signale, die vom Sender ausgestrahlt werden und von einem Objekt reflektiert werden empfangen können. Die Empfangsantennen sind mittels einer Weiche und einer Weichensteuerung mit dem Signalprozessor verbunden. Der Signalprozessor kann die Schalter dermaßen steuern, dass die Empfangsantennen in jeder beliebigen Reihenfolge mit dem Signalprozessor verbunden werden können.

Aufgabe der Erfindung ist es, einen Radarsensor zur Verfügung zu stellen, der auch bei bewegten Zielen eine zuverlässige Detektion der Winkellage ermöglicht.

Gelöst wird diese Aufgabe durch die in den Ansprüchen 1 und 15 angegebenen Merkmale.

Vorteilhafte Weiterentwicklungen der Erfindung sind in den Unteransprüchen angegeben.

Bei dem erfindungsgemäßen Radarsensor werden die Antennenelemente eines Antennenarrays entsprechend einer Schaltsequenz zeitlich nacheinander jeweils einzeln mit einer Sende- oder Empfangseinheit des Radarsensors verschaltet, wobei die Schaltsequenz von der räumlichen Abfolge der Antennenelemente im Antennenarray abweicht.

Wenn die Antennenelemente entsprechend einer so gewählten Schaltsequenz mit der Sende- oder Empfangseinheit verschaltet werden, wird verhindert, dass die von einer Geschwindigkeit des Ziels verursachten Phasenbeiträge eine entlang des Antennenarrays linear ansteigende oder abfallende Phasenprogression hervorrufen. Eine derartige durch eine Geschwindigkeit des Ziels verursachte Phasenprogression kann bei der erfindungsgemäßen Lösung verhindert werden. Insofern wird die lineare Phasenprogression entlang dem Antennenarray ausschließlich durch die Winkellage des Zielobjekts bestimmt, während die Geschwindigkeit des Ziels bei geeigneter Festlegung der Schaltsequenz zwar Beiträge zur Phase, aber keinen Beitrag zur linearen Phasenprogression entlang des Antennenarrays liefert.

Insofern ermöglicht eine geeignete Festlegung der zeitlichen Schaltreihenfolge der Antennenelemente, die Winkellage des Ziels unmittelbar anhand der ermittelten Phasenprogression zu bestimmen. Verglichen mit früheren Lösungen, bei denen komplexe Berechnungen vorgenommen werden mussten, um Winkellage und Geschwindigkeit des Ziels separat zu ermitteln, kann dadurch eine wesentliche Vereinfachung bei der Winkelbestimmung erzielt werden. Die Erfindung ermöglicht eine winkeltreue Abbildung auch von bewegten Zielen.

Durch geeignete Festlegung der Schaltsequenz können zusätzlich die im Winkelbereich auftretenden Scheinziele auf bestimmte Winkelbereiche beschränkt und in ihrer Intensität verringert werden, was die Auswertung weiter vereinfacht.

Nachfolgend ist die Erfindung anhand mehrerer in der Zeichnung dargestellter Ausführungsbeispiele näher erläutert.

Es zeigen:
Fig. 1 einen Radarsensor mit einem Antennenarray im Empfangspfad;
Fig. 2 einen Radarsensor mit einem Antennenarray im Sendepfad;
Fig. 3 eine durch ein bewegtes Zielobjekt hervorgerufene Phasenprogression;
Fig. 4 die Überlagerung einer winkelabhängigen Phasenprogression und einer geschwindigkeitsabhängigen Phasenprogression bei einer Lösung des Stands der Technik;
Fig. 5 zwei Beispiele von erfindungsgemäßen Schaltsequenzen für das Antennenarray;
Fig. 6 die winkelabhängige, die geschwindigkeitsabhängige und gesamte Phasenprogression bei Verwendung einer erfindungsgemäßen Schaltsequenz;
Fig. 7 eine Veranschaulichung der räumlichen Modulationsfrequenz für den Fall eines geschwindigkeitsabhängigen Phasenbeitrags mit alternierendem Vorzeichen; und
Fig. 8 eine schematische Darstellung des θ x v-Raums.

Zur Bestimmung der Ausbreitungsrichtung elektromagnetischer Wellen werden häufig lineare Antennenarrays eingesetzt, die eine Anzahl n von nebeneinander in einer Reihe angeordneten Antennenelementen umfassen, wobei n eine natürliche Zahl ist. Derartige lineare Antennenarrays werden beispielsweise in Radarsystemen eingesetzt, um die Winkellage eines Zielobjekts bestimmen zu können.

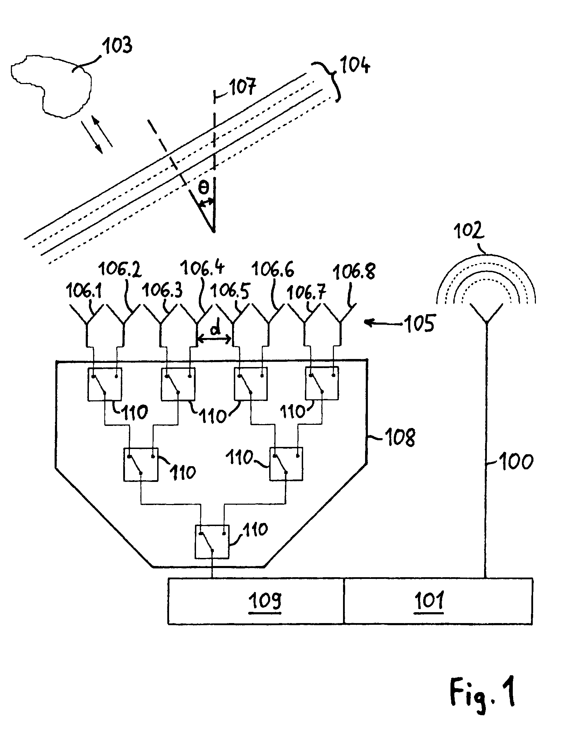

In Fig. 1 ist ein Radarsystem gezeigt, das ein Antennenarray im Empfangspfad aufweist. Das Radarsystem umfasst eine Sendeantenne 100, die mit einer Sendereinheit 101 verbunden ist und ein Sendesignal 102 abstrahlt. Durch Reflexion dieses Sendesignals 102 an einem Zielobjekt 103 wird eine Wellenfront 104 erzeugt. Zunächst soll angenommen werden, dass es sich bei dem Zielobjekt 103 um ein statisches Zielobjekt handelt.

Die am Zielobjekt 103 reflektierte Wellenfront 104 trifft auf das Antennenarray 105, das Teil des Empfangspfads ist. Das Antennenarray 105 umfasst n nebeneinander in einer Reihe angeordnete Antennenelemente. Bei der in Fig. 1 gezeigten Ausführungsform besteht das Antennenarray 105 aus acht linear nebeneinander angeordnete Antennenelemente 106.1 bis 106.8, wobei der Abstand zwischen benachbarten Antennenelementen mit "d" bezeichnet ist.

Die Wellenfront 104 ist um einen gewissen Neigungswinkel θ gegenüber der Normalen 107 zum Antennenarray 105 geneigt. Durch den schrägen Einfall der Wellenfront 104 auf dem Antennenarray 105 wird eine Phasenprogression auf die von den einzelnen Antennenelementen 106.1 bis 106.8 empfangenen Signale aufgeprägt. Die bedeutet, dass ein von einem bestimmten Antennenelement empfangenes Signal gegenüber einem vom vorhergehenden Antennenelement empfangenen Signal einen gewissen Phasenversatz aufweist, der vom Einfallswinkel θ der Wellenfront 104 abhängt. Ausgehend von dieser Phasenprogression kann der Einfallswinkel θ der Wellenfront 104 bestimmt werden.

Entsprechend der in Fig. 1 gezeigten Ausführungsform handelt es sich bei dem Antennenarray 105 um ein geschaltetes Antennenarray. Dies bedeutet, dass die Antennenelemente 106.1 bis 106.8 zur Auswertung der Empfangssignale über eine Schalteinheit 108 einzeln nacheinander mit einer Auswerteeinheit 109 des Radarsensors verschaltet werden.

Jedes der Antennenelement 106.1 bis 106.8 kann beispielsweise während einer Schalttaktperiode mit der Auswerteeinheit 109 verbunden werden, um auf diese Weise das von dem jeweiligen Antennenelement empfangen Signal auszuwerten. Anschließend wird zum nächsten Antennenelement weitergeschaltet. Typischerweise werden die einzelnen Antennenelemente 106.1 bis 106.8 entsprechend ihrer räumlichen Anordnung entweder von rechts nach links oder von links nach rechts einzeln nacheinander mit der Auswerteeinheit 109 verschaltet, um nacheinander die Phasen der verschiedenen Empfangssignale zu bestimmen. Aus dem so ermittelten Phasenverlauf kann dann die Winkellage θ_{Ziel} des Zielobjekts 103 abgeleitet werden.

Die Schalteinheit 108 kann beispielsweise als Schaltbaum realisiert sein, der eine Mehrzahl von Schaltelementen 110 umfasst. In der Radartechnik können die einzelnen Schaltelemente 110 der Schalteinheit 108 vorzugsweise mit Hilfe von PIN-Dioden realisiert werden.

Bei der in Fig. 1 gezeigten Ausführungsform ist zur Auswertung sämtlicher Empfangskanäle nur eine einzige Auswerteeinheit 109 erforderlich. Diese Lösung ist daher deutlich kostengünstiger, als wenn man für jeden Empfangskanal eine separate Auswerteelektronik zur Verfügung stellen würde.

Bei der in Fig. 1 gezeigten Ausführungsform wird zur Bestimmung der Richtung einer elektromagnetischen Welle bzw. der Winkellage eines Zielobjekts ein Antennenarray im Empfangspfad eingesetzt. Entsprechend einer alternativen Ausführungsform ist es jedoch ebenso möglich, zur Bestimmung der Winkellage eines Zielobjekts ein Antennenarray im Sendepfad einzusetzen.

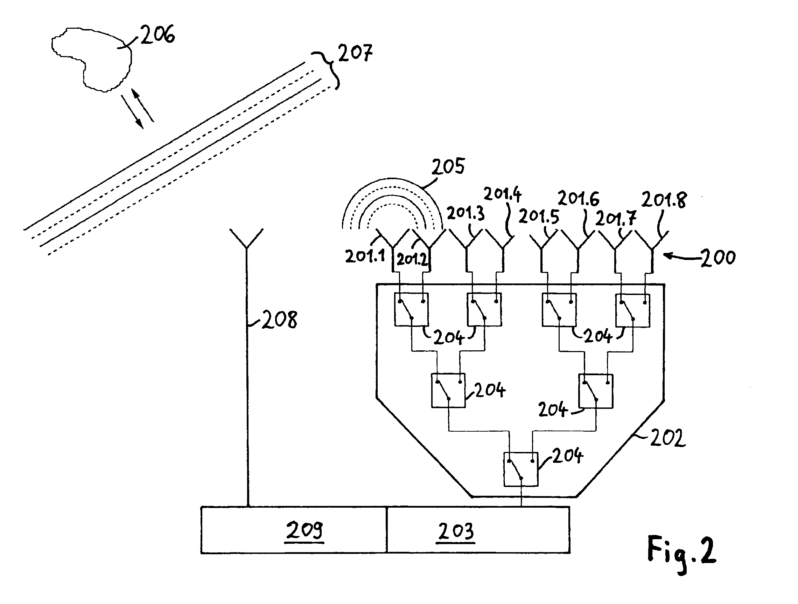

Eine derartige Ausführungsform ist in Fig. 2 gezeigt. Dabei umfasst das Antennenarray 200 eine Mehrzahl von Sendeantennen 201.1 bis 201.8, die über eine Schalteinheit 202 selektiv nacheinander mit einer Sendereinheit 203 eines Radarsensors verschaltet werden können. Die Schalteinheit 202 kann dabei vorzugsweise als Schaltbaum realisiert sein und eine Mehrzahl von Schaltelementen 204 umfassen. Während einer Schalttaktperiode ist jeweils eine der Sendeantennen 201.1 bis 201.8 aktiv und strahlt eine elektromagnetische Welle 205 ab. Diese elektromagnetische Welle 205 wird an einem Zielobjekt 206 reflektiert, und die reflektierte Wellenfront 207 kann von einer Empfangsantenne 208 empfangen und von einer Auswerteeinheit 209 des Radarsensors ausgewertet werden. Insbesondere kann während jeder Schalttaktperiode eine charakteristische Phase des Empfangssignals detektiert werden, die dann der jeweils aktiven Sendeantenne zugeordnet werden kann. Auf diese Weise kann jeder Sendeantenne 201.1 bis 201.8 des Antennenarrays 200 eine zugehörige Phase des Empfangssignals zugeordnet werden. Genau wie bei der in Fig. 1 beschriebenen Ausführungsform kann aus der so ermittelten Phasenprogression die Winkellage des Zielobjekts 206 abgeleitet werden.

Bei den in Fig. 1 und Fig. 2 gezeigten Radarsensoren kann es sich entsprechend einer Ausführungsform um Radarsensoren handeln, die dazu ausgelegt sind, die Entfernung zu einem Zielobjekt zu bestimmen. Vorzugsweise werden Radarsensoren verwendet, die gemäß dem FMCW (Frequency Modulated Continuous Wave)-Prinzip arbeiten. Bei der Entfernungsmessung mittels Radar nach dem FMCW-Prinzip wird ein frequenzmoduliertes Radarsignal im Dauerstrichbetrieb ausgesendet und am jeweiligen Ziel reflektiert, und das reflektierte Signal wird vom Radarsensor empfangen und ausgewertet.

Die Frequenz des Sendesignals des Radarsensors kann sich dabei in der Größenordnung von 20 GHz bis 100 GHz bewegen, wobei die Frequenzmodulation typischerweise eine Bandbreite von 1 bis 5 GHz aufweist. Um mit einem geschalteten Sende- oder Empfangsarray Messungen nach dem FMCW-Prinzip durchführen zu können, muss die Schalttaktperiode des Schaltsignals hinreichend lang sein, um während einer Schalttaktperiode eine Entfernungsmessung durchführen zu können. Dabei liegen die typischerweise verwendeten Schalttaktperioden im Bereich zwischen 100 µs und 10 ms.

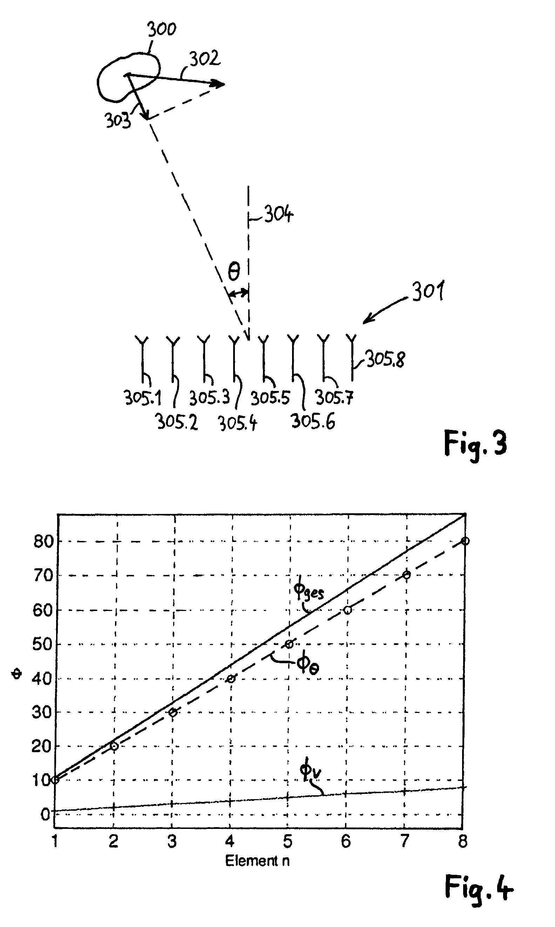

Während bei den bisher diskutierten statischen Zielen eine parallele und eine sequentielle Auswertung der Antennensignale äquivalent sind, ist dies bei bewegten Zielen nicht mehr der Fall, wie im Folgenden erläutert wird. In Fig. 3 ist ein Zielobjekt 300 gezeigt, das sich relativ zum Antennenarray 301 mit einer Geschwindigkeit 302 bewegt. Die Geschwindigkeit 302 umfasst eine radiale Geschwindigkeitskomponente 303 in Richtung auf das Antennenarray 301 zu. Diese radiale Geschwindigkeitskomponente 303, auf die es bei Phasenbetrachtungen in erster Linie ankommt, wird im Folgenden auch als Geschwindigkeit v bezeichnet werden. Die Winkellage des Zielobjekts 300 relativ zum Antennenarray 301 wird durch den Winkel θ zu Normalen 304 beschrieben. Das in Fig. 3 gezeigte Antennenarray 301 umfasst acht in einer Linie angeordnete Antennenelemente 305.1 bis 305.8, die nacheinander einzeln von links nach rechts zum Empfangspfad durchgeschaltet werden. Bei der Auswertung der von den Antennenelementen 305.1 bis 305.8 empfangenen Signale erhält man eine Phasenprogression, die sich aus einem winkelabhängigen Phasenbeitrag und einem durch die Radialgeschwindigkeit v verursachten Phasenbeitrag zusammensetzt. Der geschwindigkeitsabhängige Beitrag entsteht deshalb, weil sich das Zielobjekt 300 während des Durchschaltens der Antennenelemente immer weiter auf die Antennenelemente zu bewegt und dadurch einen zusätzlichen Phasenbeitrag verursacht. Insofern entsteht der geschwindigkeitsabhängige Beitrag durch das Zusammenwirken der radialen Geschwindigkeitskomponente 303 des Zielobjekts 300 mit der sequentiellen Weiterschaltung der Antennenelemente von links nach rechts, weil sich das Zielobjekt 300 während des Weiterschaltens immer weiter auf das Antennenarray 301 zu bewegt.

In Fig. 4 ist dargestellt, wie sich die gesamte Phasenprogression für die Antennenelemente zusammensetzt, wobei die verschiedenen Phasenbeiträge für die acht Antennenelemente 305.1 bis 305.8 von links nach rechts aufgetragen sind. Durch den schrägen Einfall der Wellenfront wird eine winkelabhängige Phasenprogression Φ_{θ} verursacht, die in Fig. 4 als gestrichelte Linie eingetragen ist. Zusätzlich wird durch die Radialgeschwindigkeit v eine geschwindigkeitsabhängige Phasenprogression Φᵥ verursacht, die für den Fall, dass die Antennenelemente nacheinander von links nach rechts ausgewertet werden, ebenfalls linear zunimmt. Die winkelabhängige lineare Phasenprogression Φ_{θ} und die geschwindigkeitsabhängige lineare Phasenprogression Φᵥ überlagern sich zu einer gesamten Phasenprogression Φ_{ges} der von den Antennenelementen empfangenen Signale. Diese gesamte Phasenprogression Φ_{ges} ist ebenfalls in Fig. 4 eingezeichnet. Durch Auswertung der Antennensignale im Empfangspfad kann die gesamte Phasenprogression Φ_{ges} bestimmt werden, es ist aber nicht möglich, den winkelabhängigen Anteil Φ_{θ} oder den geschwindigkeitsabhängigen Anteil Φᵥ isoliert zu erhalten, weil beide Anteile jeweils einen linearen Phasenbeitrag liefern.

Um den winkelabhängigen Anteil der Gesamtphase isolieren zu können, wird entsprechend der erfindungsgemäßen Lösung vorgeschlagen, die Schaltreihenfolge, entsprechend der die Antennenelemente des Antennenarrays nacheinander durchgeschaltet werden, so abzuändern, dass der geschwindigkeitsverursachte Phasenbeitrag keine linear ansteigenden Phasenprogression mehr liefert.

Entsprechend der erfindungsgemäßen Lösung muss dazu insbesondere verhindert werden, dass die zeitliche Schaltsequenz die Antennenelemente des Arrays entsprechend ihrer räumlichen Anordnung der Reihe nach durchschaltet, denn diese Übereinstimmung zwischen zeitlicher Schaltreihenfolge und räumlicher Anordnung ist dafür verantwortlich, dass sich die geschwindigkeitsverursachte Phasenbeiträge bei den bisherigen Lösungen stets als zusätzliche lineare Phasenprogression auswirken. Entsprechend den Ausführungsformen der vorliegenden Erfindung wird die zeitliche Schaltsequenz für die Antennenelemente daher so gewählt, dass sie gerade nicht der räumlichen Anordnung der Antennenelemente im Array entspricht. Durch eine derartige erfindungsgemäße Wahl der Schaltsequenz kann erreicht werden, dass sich der winkelabhängige Anteil der Phasenprogression und der geschwindigkeitsabhängige Anteil der Phasenprogression voneinander trennen lassen, so dass sich insbesondere die Winkellage des Zielobjekts auch dann genau bestimmen lässt, wenn sich das Zielobjekt bewegt.

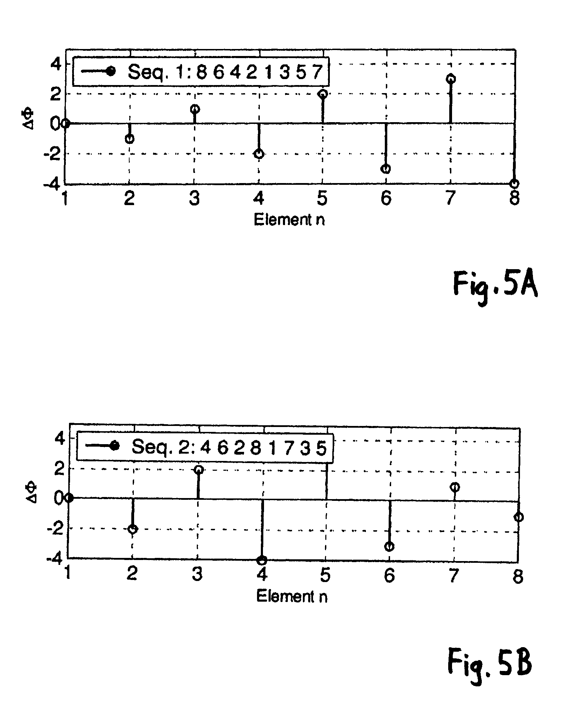

In Fig. 5A und 5B werden zwei Beispiele für erfindungsgemäße Schaltsequenzen gegeben, die so ausgelegt sind, dass der durch bewegte Ziele verursachte Phasenbeitrag zu keiner zusätzlichen linearen Phasenprogression für die Antennenelemente führt. Zu jeder Schaltsequenz sind auch die jeweils resultierenden Phasenbeiträge ΔΦ für die einzelnen Antennenelemente graphisch dargestellt.

Bei dem Beispiel von Fig. 5A werden die acht Antennenelemente des Arrays entsprechend der Sequenz "8 6 4 2 1 3 5 7" durchgeschaltet. Zuerst wird also das achte Antennenelement aktiviert, dann das sechste, das vierte, das zweite, etc. Wenn man annimmt, dass sich die Phase als Funktion der Zeit infolge der Bewegung des Zielobjekts kontinuierlich erhöht, dann wird durch diese Schaltsequenz dem achten Antennenelement die niedrigste Phase zugewiesen, dann dem sechsten Antennenelement die zweitniedrigste Phase, dem vierten Antennenelement eine etwas höhere Phase, etc. Wenn man die Phase, die durch diese Schaltsequenz dem ersten Antennenelement zugewiesen wird, als 0 definiert, dann ergeben sich für die einzelnen Antennenelemente die in Fig. 5A gezeigten Phasenbeiträge ΔΦ. Anhand von Fig. 5A kann unmittelbar erkannt werden, dass sich bei Verwendung der Beispielschaltsequenz "8 6 4 2 1 3 5 7" keine linear ansteigende oder linear abfallende Phasenprogression für den geschwindigkeitsverursachten Phasenbeitrag ergibt.

Bei dem in Fig. 5B gezeigten Beispiel werden die Antennenelemente entsprechend der Schaltsequenz "4 6 2 8 1 7 3 5" nacheinander durchgeschaltet. Zuerst wird also das vierte Antennenelement, dann das sechste, das zweite, dann das achte Antennenelement aktiviert, etc. Wenn man annimmt, dass die Phase infolge der Bewegung des Zielobjekts während der Schaltsequenz kontinuierlich ansteigt, dann wird durch diese Schaltsequenz dem vierten Antennenelement die niedrigste Phase, dem sechsten Antennenelement die zweitniedrigste Phase, dem zweiten Antennenelement eine etwas höhere Phase zugewiesen, etc. Wenn man die dem ersten Antennenelement zugewiesene Phase als 0 definiert, dann ergeben sich für die einzelnen Antennenelemente die in Fig. 5B gezeigten Phasenbeiträge. Da die Schaltsequenz "4 6 2 8 1 7 3 5" nicht der räumlichen Anordnung der Antennenelemente im Array entspricht, ergibt sich für den geschwindigkeitsverursachten Phasenbeitrag keine linear ansteigende oder linear abfallende Phasenprogression. Dies kann aus Fig. 5B unmittelbar erkannt werden.

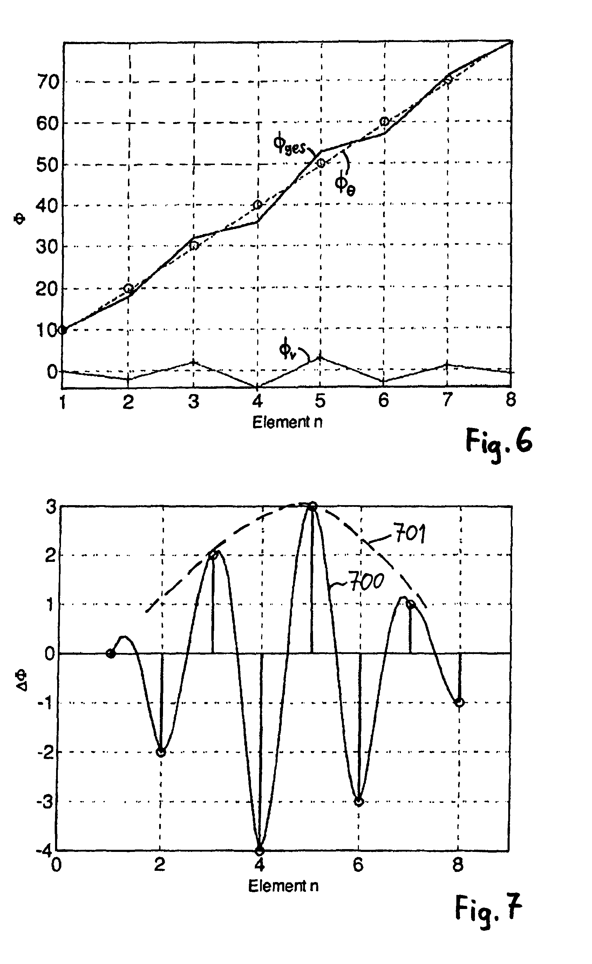

Entsprechend einem weiteren Gesichtspunkt wird die Schaltsequenz so ausgewählt, dass sowohl die negativen Phasenbeiträge als auch die positiven Phasenbeiträge so auf die verschiedenen Antennenelemente verteilt werden, so dass sich bei Durchführung einer linearen Regressionsanalyse für den geschwindigkeitsverursachten Phasenbeitrag eine Regressionsgerade mit Steigung 0 ergibt. Mit anderen Worten werden die geschwindigkeitsverursachten Phasenbeiträge so auf die Antennenelemente verteilt, dass sie keinen Beitrag zur linearen Regressionsanalyse der Gesamtphase liefern. In Fig. 6 sind die winkelabhängigen Phasenbeiträge Φ_{θ}., die geschwindigkeitsabhängigen Phasenbeiträge Φᵥ und die resultierende Gesamtphase Φ_{ges} bei Verwendung der in Fig. 5B vorgestellten Schaltsequenz "4 6 2 8 1 7 3 5" für die verschiedenen Antennenelemente veranschaulicht. Dabei ergibt sich die Gesamtphase Φ_{ges} als Summe der geschwindigkeitsabhängigen Phasenbeiträge Φᵥ und der winkelabhängigen Phasenbeiträge Φ_{θ}.

Entsprechend der gewählten Schaltsequenz "4 6 2 8 1 7 3 5" werden die positiven und negativen geschwindigkeitsverursachten Phasenbeiträge Φᵥ auf die Antennenelemente aufgeteilt. Wenn man eine lineare Regressionsanalyse durch der geschwindigkeitsabhängigen Phasenbeiträge Φᵥ durchführt, etwa mit der Methode der kleinsten Fehlerquadrate, dann erhält man eine Gerade der Steigung 0. Durch geeignete Wahl der Schaltsequenz kann also erreicht werden, dass die Regressionsgerade durch die geschwindigkeitsverursachten Phasenbeiträge die Steigung 0 hat. Daher wird durch die Bewegung des Zielobjekts zwar ein Phasenfehler, aber keine zusätzliche lineare Phasenprogression eingeführt.

Durch die Winkellage des Zielobjekts wird eine von links nach rechts linear ansteigende winkelabhängige Phasenprogression Φ_{θ} hervorgerufen. Wenn zu dieser winkelabhängigen Phasenprogression Φ_{θ} die geschwindigkeitsabhängigen Phasenbeiträge Φᵥ hinzugefügt werden, um die gesamte Phasenprogression Φ_{ges} zu erhalten, dann erkennt man in der gesamten Phasenprogression Φ_{ges} zwar die geschwindigkeitsinduzierten Schwankungen, die Steigung der Phasenprogression Φ_{ges} bleibt aber im wesentlichen unverändert. In anderen Worten hat die Regressionsgerade durch die gesamte Phasenprogression Φ_{ges} die gleiche Steigung wie die Regressionsgerade durch die winkelabhängige Phasenprogression Φ_{θ}, weil durch die geschwindigkeitsabhängigen Phasenbeiträge bei geeigneter Wahl der Schaltsequenz keine zusätzliche lineare Progression eingeführt wird.

Insofern wird durch Verwendung einer erfindungsgemäßen Schaltsequenz die Auswertung der Winkellage des Zielobjekts erheblich vereinfacht. Aus den Empfangssignalen der einzelnen Antennenelemente erhält man unmittelbar die Gesamtphase Φ_{ges}, und mittels einer linearen Regressionsanalyse von Φ_{ges} erhält man die Steigung der Regressionsgeraden. Da diese Steigung bei der erfindungsgemäßen Lösung der Steigung der winkelabhängigen Phasenprogression Φ_{θ} entspricht, kann die Winkellage θ_{Ziel} des Zielobjekts durch lineare Regressionsanalyse von Φ_{ges} erhalten werden.

Ein weiterer Gesichtspunkt bei der Wahl einer geeigneten Schaltsequenz ist, dass die von der Geschwindigkeit verursachten Phasenbeiträge nach Möglichkeit von Antennenelement zu Antennenelement im Vorzeichen alternieren sollten. Bei den beiden in Fig. 5A und 5B gezeigten Schaltsequenzen ist dies der Fall, weil den geradzahligen Antennenelementen jeweils die negativen Phasenbeiträge und den ungeradzahligen Antennenelementen jeweils die positiven Phasenbeiträge zugewiesen werden. Daher wechseln sich Phasenbeiträge in eine Richtung mit Phasenbeiträgen in die andere Richtung miteinander ab.

Entlang der Richtung des Antennenarrays erhält man deshalb eine durch die Geschwindigkeit des Zielobjekts verursachte räumlich hochfrequente Phasenvariation der von den Antennenelementen empfangenen Signale, und diese geschwindigkeitsverursachte Phasenvariation kann man als Phasenmodulation im Ortsbereich verstehen. Da Winkelbereich und Ortsbereich über die Fouriertransformation miteinander verknüpft sind, ist es vorteilhaft, wenn die Modulation im Ortsbereich möglichst hochfrequent ist, damit Geisterziele im Winkelbereich möglichst weit ab vom eigentlichen Ziel liegen. Die maximal mögliche räumliche Modulationsfrequenz erhält man, wenn man die Schaltsequenz so wählt, dass sich ein von Antennenelement zu Antennenelement alternierendes Vorzeichen des Phasenbeitrags ergibt. Die beiden in Fig. 5A und Fig. 5B gezeigten Schaltsequenzen erfüllen diese Bedingung, bei ihnen ändert sich das Vorzeichen des Phasenbeitrags von einem Antennenelement zum nächsten. Die beiden in Fig. 5A und 5B gezeigten Schaltsequenzen sind daher so gewählt, dass die im Frequenzbereich auftretenden Geisterziele möglichst weit vom eigentlichen Zielobjekt entfernt auftreten.

Ein Phasenbeitrag mit alternierendem Vorzeichen kann, wie in Fig. 7 gezeigt, als abgetastete Sinusfunktion 700 interpretiert werden, die mit einer Fensterfunktion 701 gewichtet ist. Die Modulationsfrequenz der Sinusfunktion 700 hängt dabei lediglich von dem Abstand d der Antennenelemente, nicht aber von der Geschwindigkeit des Zielobjekts ab. Insofern ist die räumliche Modulationsfrequenz durch die Geometrie des Antennenarrays vorgegeben. Dies bedeutet, dass die Geisterziele unabhängig von der Zielgeschwindigkeit immer an einer vorhersehbaren Position im Frequenzraum auftauchen. Darüber hinaus kann gezeigt werden, dass im Winkelbereich ein gewisser Bereich um die Antennenachse immer frei von solchen Geisterzielen bleibt. Bei einem typischen Abstand der Antennenelemente von etwa einer halben Wellenlänge kann z.B. ein Winkelbereich von ca. ±30° um die Arrayachse winkeltreu und frei von Geisterzielen abgebildet werden.

Daneben spielt auch die Wahl der einhüllenden Fensterfunktion 701 in Fig. 7 eine wichtige Rolle. Vorteilhaft sind Fensterfunktionen, die bei periodischer Fortsetzung möglichst geringe Diskontinuitäten (hochfrequente Spektralanteile) enthalten. Die Verwendung derartiger Fensterfunktionen hat zur Folge, dass das Winkelspektrum in der Umgebung der Geisterziele schnell abklingt und somit das Nebenkeulen-Niveau nicht unnötig angehoben wird. Die Fensterfunktion 800 kann zwar nicht explizit vorgegeben, aber durch die Wahl der Schaltreihenfolge und der Schaltzeitpunkte gezielt beeinflusst werden. Beispielsweise ergibt sich bei Verwendung der in Fig. 5A gezeigten Schaltsequenz "8 6 4 2 1 3 5 7" eine rampenförmige Einhüllende für die geschwindigkeitsverursachten Phasenbeiträge, während sich bei Verwendung der in Fig. 5B gezeigten Schaltsequenz "4 6 2 8 1 7 3 5" für die geschwindigkeitsverursachten Phasenbeiträge eine sinusförmige Einhüllende ergibt, was besonders vorteilhaft ist.

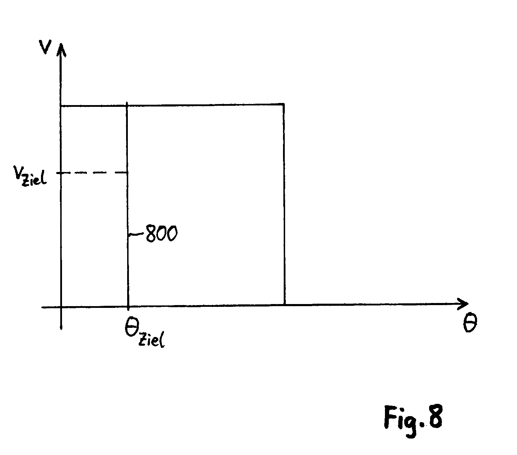

Die erfindungsgemäße Lösung ermöglicht somit eine winkeltreue Abbildung bewegter Ziele sowie eine schnelle Bestimmung der Winkellage θ_{Ziel} des Zielobjekts. Daneben ermöglicht die Erfindung auch eine vereinfachte Ermittlung der Radialgeschwindigkeit v des Zielobjektes. Dies ist in Fig. 8 anhand einer schematischen Darstellung des θ x v-Raums gezeigt. Da sich bei der erfindungsgemäßen Lösung die Winkellage θ_{Ziel} unabhängig von der Geschwindigkeit v bestimmen lässt, können die möglichen Lösungen im des θ x v-Raum auf die durch θ = θ_{Ziel} festgelegte Gerade 800 eingeschränkt werden. Insofern beschränkt sich die Geschwindigkeitsmessung auf eine einfache eindimensionale Maximum-Suche im des θ x v-Raum entlang der Geraden 800, die durch θ = θ_{ziel} festgelegt ist. Als Ergebnis dieser Suche kann die Geschwindigkeit v_{Ziel} des Zielobjekts bestimmt werden.

## Patentansprüche

1. Radarsensor, welcher aufweist:
einen Sendepfad zum Erzeugen und Senden eines Sendesignals,
einen Empfangspfad zum Empfangen von an einem Ziel reflektierten Empfangssignalen,
ein Antennenarray (105, 200) mit einer Anzahl von linear nebeneinander angeordneten Antennenelementen (106.1-106.8, 201.1-201.8), das entweder im Sendepfad als Sendeantennenarray (200) oder im Empfangspfad als Empfangsantennenarray (105) angeordnet ist,
und eine Schalteinheit (108, 202), die dazu ausgelegt ist, die Antennenelemente (106.1-106.8, 201.1-201.8) entsprechend einer vorgegebenen Schaltsequenz zeitlich nacheinander jeweils einzeln mit einer zugeordneten Sende- oder Empfangseinheit (109, 203) des Radarsensors zu verschalten,
wobei die Schaltsequenz, entsprechend der die Antennenelemente (106.1-106.8, 201.1-201.8) nacheinander mit der Sende- oder Empfangseinheit (109, 203) verschaltet werden, von der räumlichen Abfolge der Antennenelemente (106.1-106.8, 201.1-201.8) im Antennenarray (105, 200) abweicht,
wobei die den Antennenelementen (106.1-106.8, 201.1-201.8) entsprechend der Schaltsequenz zugeordneten Empfangssignale jeweils eine Phase aufweisen, die einen von der Winkellage des Ziels verursachten Phasenbeitrag und einen von der Geschwindigkeit des Ziels verursachten Phasenbeitrag umfasst,
**dadurch gekennzeichnet, dass**
die Schaltsequenz so festgelegt ist, dass die Phasenbeiträge, die durch die Geschwindigkeit des Ziels verursacht sind, entlang der Anordnung der Antennenelemente (106.1-106.8, 201.1-201.8) von einem Antennenelement zu einem benachbarten Antennenelement im Vorzeichen wechseln.

2. Radarsensor nach Anspruch 1, **dadurch gekennzeichnet, dass** das Antennenarray(105, 200) als Sendeantennenarray (200) im Sendepfad angeordnet ist und die Schalteinheit (108, 202) dazu ausgelegt ist, die Antennenelemente (106.1-106.8, 201.1-201.8) entsprechend der Schaltsequenz zeitlich nacheinander jeweils einzeln mit der zugeordneten Sendeeinheit (203) des Radarsensors zu verschalten.

3. Radarsensor nach Anspruch 2, **dadurch gekennzeichnet, dass** der Empfangspfad dazu ausgelegt ist, zu jedem nacheinander mit der Sendeeinheit (203) verschalteten Antennenelement ein zugeordnetes Empfangssignal zu ermitteln.

4. Radarsensor nach Anspruch 3, **dadurch gekennzeichnet, dass** das Antennenarray (105, 200) im Empfangspfad als Empfangsantennenarray (105) angeordnet ist und die Schalteinheit (108, 202) dazu ausgelegt ist, die Antennenelemente (106.1-106.8, 201.1-201.8) entsprechend der vorgegebenen Schaltsequenz zeitlich nacheinander jeweils einzeln mit der Empfangseinheit (109) des Radarsensors zu verschalten.

5. Radarsensor nach Anspruch 4, **dadurch gekennzeichnet, dass** der Empfangspfad dazu ausgelegt ist, zu jedem nacheinander mit der Empfangseinheit (109) verschalteten Antennenelement ein zugeordnetes Empfangssignal zu ermitteln.

6. Radarsensor nach einem der Ansprüche 1 bis 5, **dadurch gekennzeichnet, dass** der Radarsensor dazu ausgelegt ist, mindestens eines von Winkellage und Geschwindigkeit des Ziels zu bestimmen.

7. Radarsensor nach einem der Ansprüche 1 bis 7, **dadurch gekennzeichnet, dass** der von der Winkellage des Ziels verursachte Phasenbeitrag für die jeweiligen Antennenelemente (106.1-106.8, 201.1-201.8) von der Wahl der Schaltsequenz unabhängig ist.

8. Radarsensor nach einem der Ansprüche 1 bis 7, **dadurch gekennzeichnet, dass** der von der Geschwindigkeit des Ziels verursachte Phasenbeitrag für die Empfangssignale von der Schaltsequenz abhängt, entsprechend der die Antennenelemente (106.1-106.8, 201.1-201.8) mit der Sende- bzw. Empfangseinheit (109, 203) verschaltet werden.

9. Radarsensor nach einem der Ansprüche 1 bis 8, **dadurch gekennzeichnet, dass** sich durch Festlegung der Schaltsequenz, die nicht der räumlichen Abfolge der Antennenelemente (106.1-106.8, 201.1-201.8) im Antennenarray (105, 200) entspricht, dem Radarsensor eine Unterscheidung des von der Winkellage des Ziels verursachte Phasenbeitrags und des von der Geschwindigkeit des Ziels verursachten Phasenbeitrags möglich ist.

10. Radarsensor nach einem der Ansprüche 1 bis 9, **dadurch gekennzeichnet, dass** die Schaltsequenz so festgelegt ist, dass die Phasenbeiträge, die von der Geschwindigkeit des Ziels verursacht sind, im Wesentlichen zu einer linearen Regressionsanalyse der den Antennenelementen (106.1-106.8, 201.1-201.8) zugeordneten Phasen keinen Beitrag leisten.

11. Radarsensor nach einem der Ansprüche 1 bis 10, **dadurch gekennzeichnet, dass** die Schaltsequenz so festgelegt ist, dass eine Regressionsgerade durch die Phasenbeiträge, die von der Geschwindigkeit des Ziels verursacht sind, im Wesentlichen eine Steigung von Null aufweist.

12. Radarsensor nach einem der Ansprüche 1 bis 11, **dadurch gekennzeichnet, dass** der Radarsensor dazu ausgelegt ist, aus der Steigung einer Regressionsgeraden durch die Phasen der den Antennenelementen (106.1-106.8, 201.1-201.8) zugeordneten Empfangssignale die Winkellage des Ziels abzuleiten.

13. Radarsensor nach einem der Ansprüche 1 bis 12, **dadurch gekennzeichnet, dass** die Schaltsequenz so festgelegt ist, dass die Phasenbeiträge, die durch die Geschwindigkeit des Ziels verursacht sind, entlang der linearen räumlichen Anordnung der Antennenelemente (106.1-106.8, 201.1-201.8) eine hochfrequente örtliche Phasenmodulation aufweisen.

14. Radarsensor nach einem der Ansprüche 1 bis 13, **dadurch gekennzeichnet, dass** die Schaltsequenz so festgelegt wird, dass den einzelnen Antennenelementen (106.1-106.8, 201.1-201.8) zugeordnete Phasenbeiträgen, die durch die Geschwindigkeit des Ziels verursacht sind, einer Hüllkurve entsprechen, deren Form einer Ausbildung von Scheinzielen im Winkelbereich entgegenwirkt.

15. Verfahren zum Betrieb eines Radarsensors, welcher einen Sendepfad zum Erzeugen und Senden eines Sendesignals, einen Empfangspfad zum Empfangen von an einem Ziel reflektierten Empfangssignalen und ein Antennenarray (105, 200) mit einer Anzahl von linear nebeneinander angeordneten Antennenelementen (106.1-106.8, 201.1-201.8) umfasst, wobei das Antennenarray (105, 200) entweder im Sendepfad als Sendeantennenarray (200) oder im Empfangspfad als Empfangsantennenarray (105) angeordnet ist,
wobei die Antennenelemente (106.1-106.8, 201.1-201.8) zeitlich nacheinander jeweils einzeln mit einer zugeordneten Sende- oder Empfangseinheit (109, 203) des Radarsensors entsprechend einer vorgegebenen Schaltsequenz verschaltet werden, wobei die Schaltsequenz von der räumlichen Abfolge der Antennenelemente (106.1-106.8, 201.1-201.8) im Antennenarray (105, 200) abweicht,
wobei die den Antennenelementen (106.1-106.8, 201.1-201.8) entsprechend der Schaltsequenz zugeordneten Empfangssignale jeweils eine Phase aufweisen, die einen von der Winkellage des Ziels verursachten Phasenbeitrag und einen von der Geschwindigkeit des Ziels verursachten Phasenbeitrag umfasst,
**dadurch gekennzeichnet, dass**
die Schaltsequenz so festgelegt wird, dass die Phasenbeiträge, die durch die Geschwindigkeit des Ziels verursacht wird, entlang der Anordnung der Antennenelemente (106.1-106.8, 201.1-201.8) von einem Antennenelement zu einem benachbarten Antennenelement im Vorzeichen wechseln.

## Claims

1. Radar sensor, comprising
a transmission path to generate and transmit a transmission signal,
a reception path to receive reception signals reflected at a target,
an antenna array (105, 200) with a number of antenna elements (106.1-106.8, 201.1-201.8) arranged in a linear manner in relation to one another, said array being arranged either in the transmission path as a transmission antenna array (200) or in the reception path as a reception antenna array (105),
and a switching unit (108, 202) which is designed to connect the antenna elements (106.1-106.8, 201.1-201.8) individually to an assigned transmission or reception unit (109, 203) of the radar sensor one after another according to a predefined switching sequence,
wherein the switching sequence according to which the antenna elements (106.1-106.8, 201.1-201.8) are successively connected to the transmission or reception unit (109, 203) differs from the spatial sequence of the antenna elements (106.1-106.8, 201.1-201.8) in the antenna array (105, 200),
wherein each of the reception signals assigned to the antenna elements (106.1-106.8, 201.1-201.8) according to the switching sequence has a phase which comprises a phase contribution caused by the angular position of the target and a phase contribution caused by the speed of the target,
**characterized in that**
the switching sequence is defined in such a way that the phase contributions caused by the speed of the target change sign from one antenna element to a neighboring antenna element along the arrangement of the antenna elements (106.1-106.8, 201.1-201.8).

2. Radar sensor as claimed in Claim 1, **characterized in that** the antenna array (105, 200) is arranged as a transmission antenna array (200) in the transmission path and the switching unit (108, 202) is designed to individually connect the antenna elements (106.1-106.8, 201.1-201.8) to the assigned transmission unit (203) of the radar sensor one after another in accordance with the switching sequence.

3. Radar sensor as claimed in Claim 2, **characterized in that** the reception path is designed to determine an assigned reception signal for every antenna element connected successively with the transmission unit (203).

4. Radar sensor as claimed in Claim 3, **characterized in that** the antenna array (105, 200) is arranged in the reception path as a reception antenna array (105) and the switching unit (108, 202) is designed to individually connect the antenna elements (106.1-106.8, 201.1-201.8) to the reception unit (109) of the radar sensor one after another in accordance with the defined switching sequence.

5. Radar sensor as claimed in Claim 4, **characterized in that** the reception path is designed to determine an assigned reception signal for every antenna element connected successively with the reception unit (109).

6. Radar sensor as claimed in one of the Claims 1 to 5, **characterized in that** the radar sensor is designed to determine at least the angular position or the velocity of the target.

7. Radar sensor as claimed in one of the Claims 1 to 6, **characterized in that** the phase contribution caused by the angular position of the target for the individual antenna elements (106.1-106.8, 201.1-201.8) is independent of the choice of switching sequence.

8. Radar sensor as claimed in one of the Claims 1 to 7, **characterized in that** the phase contribution for the reception signals caused by the velocity of the target depends on the switching sequence according to which the antenna elements (106.1-106.8, 201.1-201.8) are connected to the transmission or reception unit (109, 203).

9. Radar sensor as claimed in one of the Claims 1 to 8, **characterized in that** it is possible for the radar sensor to distinguish between the phase contribution caused by the angular position of the target and the phase contribution caused by the velocity of the target by defining the switching sequence that does not correspond to spatial sequence of the antenna elements (106.1-106.8, 201.1-201.8) in the antenna array (105, 200).

10. Radar sensor as claimed in one of the Claims 1 to 9, **characterized in that** the switching sequence is defined in such a way that the phase contributions that are caused by the velocity of the target essentially do not make any contribution to a linear regression analysis of the phases assigned to the antenna elements (106.1-106.8, 201.1-201.8).

11. Radar sensor as claimed in one of the Claims 1 to 10, **characterized in that** the switching sequence is defined in such a way that a regression line through the phase contributions that are caused by the speed of the target essentially has a slope of zero.

12. Radar sensor as claimed in one of the Claims 1 to 11, **characterized in that** the radar sensor is designed to derive the angular position of the target from the slope of a regression line through the phases of the reception signals assigned to the antenna elements (106.1-106.8, 201.1-201.8).

13. Radar sensor as claimed in one of the Claims 1 to 12, **characterized in that** the switching sequence is defined in such a way that the phase contributions that are caused by the velocity of the target present a high-frequency local phase modulation along the linear spatial arrangement of the antenna elements (106.1-106.8, 201.1-201.8).

14. Radar sensor as claimed in one of the Claims 1 to 13, **characterized in that** the switching sequence is defined in such a way that the phase contributions assigned to the individual antenna elements (106.1-106.8, 201.1-201.8) and caused by the speed of the target correspond to an envelope curve whose form acts against the formation of bogus targets in the angular zone.

15. Procedure for operating a radar sensor which has a transmission path for generating and transmitting a transmission signal, a reception path for receiving reception signals reflected at a target and an antenna array (105, 200) with a number of antenna elements (106.1-106.8, 201.1-201.8) arranged in a linear manner in relation to one another, said array (105, 200) being arranged either in the transmission path as a transmission antenna array (200) or in the reception path as a reception antenna array (105),
wherein the antenna elements (106.1-106.8, 201.1-201.8) are individually connected to an assigned transmission or reception unit (109, 203) of the radar sensor one after another according to a predefined switching sequence, wherein the switching sequence differs from the spatial sequence of the antenna elements (106.1-106.8, 201.1-201.8) in the antenna array (105, 200),
wherein each of the reception signals assigned to the antenna elements (106.1-106.8, 201.1-201.8) according to the switching sequence has a phase which comprises a phase contribution caused by the angular position of the target and a phase contribution caused by the speed of the target,
**characterized in that**
the switching sequence is defined in such a way that the phase contributions caused by the speed of the target change sign from one antenna element to a neighboring antenna element along the arrangement of the antenna elements (106.1-106.8, 201.1-201.8).

## Revendications

1. Capteur radar comprenant
un circuit d'émission destiné à générer et à émettre un signal d'émission,
un circuit de réception destiné à recevoir les signaux de réception réfléchis sur une cible,
un réseau d'antennes (105, 200) avec un nombre d'éléments d'antenne (106.1-106.8, 201.1-201.8) juxtaposés de façon linéaire, qui est disposé soit dans le circuit d'émission en tant que réseau d'antennes d'émission (200), soit dans le circuit de réception en tant que réseau d'antennes de réception (105),
et une unité de commutation (108, 202), qui est conçue de telle sorte à commuter successivement dans le temps les éléments d'antenne (106.1-106.8, 201.1-201.8) selon une séquence de commutation prédéfinie, individuellement avec une unité d'émission ou de réception (109, 203) attribuée du capteur radar,
pour lequel la séquence de commutation, selon laquelle les éléments d'antenne (106.1-106.8, 201.1-201.8) sont commutés successivement dans le temps avec l'unité d'émission ou de réception (109, 203), diffère de l'ordre dans l'espace des éléments d'antenne (106.1-106.8, 201.1-201.8) au sein du réseau d'antennes (105,200),
pour lequel les signaux de réception attribués aux éléments d'antenne (106.1-106.8, 201.1-201.8) selon la séquence de commutation présentent chacun une phase, qui comprend une contribution de phase occasionnée par la position angulaire de la cible et une contribution de phase occasionnée par la vitesse de la cible,
**caractérisé**
**en ce que** la séquence de commutation est définie de telle sorte que les contributions de phase, qui sont occasionnées par la vitesse de la cible, changent de signe le long de la disposition des éléments d'antenne (106.1-106.8, 201.1-201.8) d'un élément d'antenne à un élément d'antenne voisin.

2. Capteur radar selon la revendication 1, **caractérisé en ce que** le réseau d'antennes (105, 200) est disposé dans le circuit d'émission en tant que réseau d'antennes d'émission (200) et l'unité de commutation (108, 202) est conçue de telle sorte à commuter successivement dans le temps les éléments d'antenne (106.1-106.8, 201.1-201.8) selon la séquence de commutation prédéfinie, individuellement avec l'unité d'émission (203) attribuée du capteur radar.

3. Capteur radar selon la revendication 2, **caractérisé en ce que** le circuit de réception est conçu de telle sorte à déterminer un signal de réception attribué à chaque élément d'antenne commuté successivement avec l'unité d'émission (203).

4. Capteur radar selon la revendication 3, **caractérisé en ce que** le réseau d'antennes (105, 200) est disposé dans le circuit de réception en tant que réseau d'antennes de réception (105) et l'unité de commutation (108, 202) est conçue de telle sorte à commuter successivement dans le temps les éléments d'antenne (106.1-106.8, 201.1-201.8) selon la séquence de commutation prédéfinie, individuellement avec l'unité de réception (109) du capteur radar.

5. Capteur radar selon la revendication 4, **caractérisé en ce que** le circuit de réception est conçu de telle sorte à déterminer un signal de réception attribué à chaque élément d'antenne commuté successivement avec l'unité de réception (109).

6. Capteur radar selon l'une des revendications 1 à 5, **caractérisé en ce que** le capteur radar est conçu de telle sorte à déterminer au moins la position angulaire ou la vitesse de la cible.

7. Capteur radar selon l'une des revendications 1 à 6, **caractérisé en ce que** la contribution de phase occasionnée par la position angulaire de la cible pour les éléments d'antenne (106.1-106.8, 201.1-201.8) respectifs est indépendante du choix de la séquence de commutation.

8. Capteur radar selon l'une des revendications 1 à 7, **caractérisé en ce que** la contribution de phase occasionnée par la vitesse de la cible pour les signaux de réception dépend de la séquence de commutation, selon laquelle les éléments d'antenne (106.1-106.8, 201.1-201.8) sont commutés avec l'unité d'émission ou de réception (109, 203).

9. Capteur radar selon l'une des revendications 1 à 8, **caractérisé en ce qu'**une distinction entre la contribution de phase occasionnée par la position angulaire de la cible et la contribution de phase occasionnée par la vitesse de la cible est possible pour le capteur radar par la définition de la séquence de commutation, qui ne correspond pas à l'ordre dans l'espace des éléments d'antennes (106.1-106.8, 201.1-201.8) au sein du réseau d'antennes (106, 200).

10. Capteur radar selon l'une des revendications 1 à 9, **caractérisé en ce que** la séquence de commutation est définie de telle sorte que les contributions de phase, qui sont occasionnées par la vitesse de la cible, n'apportent pour l'essentiel aucune contribution à une analyse de régression linéaire des phases attribuées aux éléments d'antenne (106.1-106.8, 201.1-201.8).

11. Capteur radar selon l'une des revendications 1 à 10, **caractérisé en ce que** la séquence de commutation est définie de telle sorte qu'une droite de régression à travers les contributions de phase, qui sont occasionnées par la vitesse de la cible, présente pour l'essentiel une pente de zéro.

12. Capteur radar selon l'une des revendications 1 à 11, **caractérisé en ce que** le capteur radar est conçu de telle sorte à déduire la position angulaire de la cible à partir de la pente d'une droite de régression à travers les phases des signaux de réception attribués aux éléments d'antenne (106.1-106.8, 201.1-201.8).

13. Capteur radar selon l'une des revendications 1 à 12, **caractérisé en ce que** la séquence de commutation est définie de telle sorte que les contributions de phase, qui sont occasionnées par la vitesse de la cible, présentent une modulation de phase locale haute fréquence le long de la disposition linéaire dans l'espace des éléments d'antenne (106.1-106.8, 201.1-201.8).

14. Capteur radar selon l'une des revendications 1 à 13, **caractérisé en ce que** la séquence de commutation est définie de telle sorte que les contributions de phase attribuées aux éléments d'antenne individuels (106.1-106.8, 201.1-201.8), qui sont occasionnées par la vitesse de la cible, correspondent à une enveloppante, dont la forme agit contre la formation de cibles fictives dans la zone angulaire.

15. Procédé destiné à l'exploitation d'un capteur radar, lequel comprend un circuit d'émission destiné à générer et à émettre un signal d'émission, un circuit de réception destiné à recevoir les signaux de réception réfléchis sur une cible et un réseau d'antennes (105, 200) avec un nombre d'éléments d'antenne (106.1-106.8, 201.1-201.8) juxtaposés de façon linéaire, le réseau d'antennes (105, 200) étant disposé soit dans le circuit d'émission en tant que réseau d'antennes d'émission (200), soit dans le circuit de réception en tant que réseau d'antennes de réception (105),
pour lequel les éléments d'antenne (106.1-106.8, 201.1-201.8) sont commutés successivement dans le temps, individuellement avec une unité d'émission ou de réception (109, 203) attribuée du capteur radar, selon une séquence de commutation prédéfinie, la séquence de commutation différant de l'ordre dans l'espace des éléments d'antenne (106.1-106.8, 201.1-201.8) au sein du réseau d'antennes (105, 200),
pour lequel les signaux de réception attribués selon la séquence de commutation aux éléments d'antenne (106.1-106.8, 201.1-201.8) présentent chacun une phase, qui comprend une contribution de phase occasionnée par la position angulaire de la cible et une contribution de phase occasionnée par la vitesse de la cible,
**caractérisé**
**en ce que** la séquence de commutation est définie de telle sorte que les contributions de phase, qui sont occasionnées par la vitesse de la cible, changent de signe le long de la disposition des éléments d'antenne (106.1-106.8, 201.1-201.8) d'un élément d'antenne à un élément d'antenne voisin.
